# DEMANDE DE BREVET EUROPEEN

(11) **EP 1 276 298 A1**
(43) Date de publication de la demande: **15.01.2003**
(21) Numéro de dépôt: 02100752.1
(22) Date de dépôt: 26.06.2002
(51) Int. Cl.: H04L 29/12

(54) **Procédé d'adressage d'un terminal mobile**

(30) Priorité: 13.07.2001 FR 0109426
(71) Demandeur: Volubill, 38330 Montbonnot Saint-Martin (FR)
(72) Inventeur: Caloud, Philippe, 38330 Saint-Ismier (FR)
(74) Mandataire: Schmit, Christian Norbert Marie

(57) **Abrégé**

On utilise des capacités existantes, protocole SIP (126a), translation d'adresse (126d), messages courts (126b), TCP (126c) pour mettre en oeuvre un serveur (119) de résolution capable de dialoguer avec un poste (101) appelant, un terminal (108) mobile appelé et une passerelle 128 devant être paramétrée pour établir une connexion entre le poste appelant et le terminal mobile via le réseau (106) Internet. Le serveur de résolution accepte des invitations de connexion, selon le protocole SIP. Ces invitations sont transmises, après résolution de l'adresse SIP, au terminal mobile sous forme d'un message court. Le terminal mobile accepte ou refuse la demande de connexion. En cas d'acceptation le terminal mobile effectue une demande d'allocation de moyens de communication à la passerelle. Ces moyens alloués sont notifiés au poste appelant via le serveur de résolution.

## Description

La présente invention a pour objet un procédé d'adressage d'un terminal mobile. Le domaine de l'invention est celui de la téléphonie mobile considérée en combinaison avec celui d'Internet. Un but de l'invention est de permettre d'effectuer des appels entrants, en mode données (DATA), vers des terminaux mobiles de type GPRS et UMTS. Un autre but de l'invention est de limiter les possibilités d'attaques destructives pouvant être effectuées vers des terminaux mobiles visibles depuis l'Internet public. Encore un autre but est de permettre à un utilisateur de contrôler quelles applications et entités extérieures au réseau pourront le joindre en mode données. Un autre but est également de permettre de joindre un utilisateur non uniquement sur un seul terminal, mais sur une liste connue de terminaux lui appartenant.

Dans l'état de la technique, pour pouvoir joindre un terminal mobile via l'Internet, il faut pouvoir l'identifier par un identifiant global, connu depuis l'Internet public. Il faut aussi que le terminal mobile soit connu dans le réseau Internet, c'est-à-dire ait une adresse Internet publique allouée.

Les solutions actuelles consistent à simplement utiliser pour les mobiles des adresses Internet publiques permanentes, c'est-à-dire allouées de manière permanente au niveau de l'Internet publique, en comptant en pratique sur un déploiement rapide de la version 6 du protocole Internet (IPV6). En effet, le nombre d'adresses publiques disponibles en version 4 du protocole Internet (IPV4) est de plus en plus limité. Ces adresses sont allouées par trois bureaux internationaux, les RIR "Regional Internet Registries" (bureau régional d'enregistrement Internet). Mais en pratique il reste peu d'adresses IPV4, et de manière certaine, un nombre insuffisant au regard du nombre de terminaux mobiles qui seront connectés en mode GPRS ou UMTS.

Il est à noter cependant que le déploiement d'IPV6 dans l'infrastructure GPRS/UMTS aura un coût important. La disponibilité de ce protocole est de plus incertaine, notamment au niveau des terminaux. Enfin IPV6 n'amène qu'une solution d'adresse de routage de bas niveau. Il reste à résoudre le problème de l'identification symbolique de l'utilisateur, et non de ses terminaux, le problème de la sécurisation des demandes de connexion entrante, c'est à dire qui peut contacter quel terminal. Il reste aussi le problème de la flexibilité de la gestion de cette sécurisation, à savoir est ce que l'utilisateur peut contrôler l'accès par des tiers à ses terminaux.

Malgré les limites d'IPV4, le nombre d'utilisateurs connectés à l'Internet a pu croître grâce aux techniques de translation d'adresse (Network Address Translation NAT). Un fournisseur d'accès à Internet (ISP, Internet Service Provider), ou une entreprise, peut gérer un ensemble d'adresses privées dans le réseau qui est le sien, ces adresses étant allouées de manière quelconque aux terminaux actifs du réseau, puisque non visibles depuis l'Internet publique. Ces adresses privées sont mises en correspondance dynamiquement, par l'équipement NAT, avec une adresse publique. Seul un ensemble d'adresses publiques, correspondant au nombre maximum de terminaux pouvant être actifs en même temps, est alors géré par le fournisseur d'accès ou l'entreprise.

Le problème de cette solution est alors qu'il est impossible d'initialiser une session vers un terminal sur le réseau privé depuis l'Internet public, puisque l'adresse publique qui lui a été dynamiquement allouée n'est pas connue, ni surtout publiée.

Une solution possible à ce problème d'adressage, qui commence à être déployée dans les réseaux fixes de données, est de mettre en place des serveurs DNS (Domain Name Server, pour serveur de nom de domaine) dynamiques, permettant de publier l'association entre un nom de machine en FQDN (Full Qualified Domain Name, pour nom complet de domaine) et son adresse IP, éventuellement dynamique. Cette solution permet un adressage "entrant" d'un terminal. D'autres solutions sont plus spécifiques à des applications, comme les applications de messagerie instantanée, ou un logiciel "client" enregistre le terminal, et donc l'adresse publique externe qu'il s'est vu dynamiquement allouée, auprès d'un serveur externe au réseau privé.

Ces solutions présentent un certain nombre d'inconvénients, en particulier, elles ne tiennent pas compte des spécificités des réseaux de données mobiles, GPRS et UMTS.

Ainsi, la norme GPRS spécifie qu'un terminal peut être adressé dans le sens "entrant" par le GGSN (Gateway GPRS Support Node, pour Noeud passerelle GPRS), mais cette fonction ne sera pas forcément réalisée dans les premières versions déployées de ces équipements. En effet, à la différence des terminaux des réseaux fixes, un terminal mobile peut être disponible pour des sessions données sans avoir d'adresse allouée dans le réseau GPRS. Dans ce cas, c'est le GGSN qui va contacter le terminal et allouer l'adresse, dans un contexte plus général, incluant des paramètres de QoS (Quality of Service, pour qualité de service), appelé le contexte PDP (Packet Description Protocol, c'est-à-dire tout protocole réseau par paquets pour lequel GPRS offre une compatibilité). Il faut noter que cette politique d'allocation d'adresses correspond en pratique à un choix de l'opérateur, avec une dépendance sur les mécanismes mis en oeuvre par les équipementiers.

Les solutions actuelles présentent également des inconvénients tels que:
- dans le cas des adresses IPV4, de ne pas pouvoir couvrir les besoins grand public, sachant qu'il n'y a pas assez d'adresses disponibles pour le parc de terminaux mobiles,
- dans le cas des adresses IPV6, d'impliquer un changement d'infrastructure complet, avec un horizon de déploiement pratique relativement lointain. A noter aussi que ces deux solutions donnent une visibilité directe des terminaux depuis l'Internet public. Un danger clair est celui des attaques de type Denial of Service ou DoS, c'est-à-dire détournement de service qui pourront rendre les terminaux cibles inopérants,
- des solutions de type DNS dynamique couvrent seulement en partie les besoins des réseaux de données mobiles : une hypothèse primordiale est en effet que c'est un logiciel client au niveau du terminal qui s'enregistre auprès du serveur DNS dynamique extérieur. Si le terminal est joignable, mais ne dispose pas d'adresse Internet à un moment donné (cas de la gestion d'adressage dynamique par GPRS), il n'est alors pas connu du serveur DNS alors même qu'il est potentiellement joignable, typiquement à travers son numéro de téléphone (MSISDN). Il manque donc un mécanisme de notification générique à la fois au niveau de l'Internet public pour signaler qu'un terminal appartenant à M. Dupont, ou de numéro 336xxxxxxxx, doit être joint pour ouvrir une session de jeux interactifs sur le port P, et potentiellement entre la passerelle GGSN et le terminal, dans le cas où celle-ci ne sait pas en pratique initialiser une connexion données entrante vers le terminal.

L'invention résout ces problèmes en associant à chaque terminal mobile une adresse symbolique. Une telle adresse électronique est, par exemple, décrite par le protocole SIP pour Section Initiation Protocol (Protocole d'initialisation de session). Le protocole SIP correspond à la RFC 2543. Dans l'invention un poste émet donc une requête pour établir une connexion, ladite requête comporte alors une adresse symbolique d'un terminal mobile. Cette requête est adressée à un serveur de résolution d'adresses SIP. Ce serveur SIP gère une table d'association entre l'adresse symbolique SIP et les identifiants du réseau de téléphonie mobile, c'est-à-dire soit un numéro de téléphone MSISDN (Mobile Station ISDN Number, c'est à dire numéro de téléphone), ou un numéro IMSI pour International Mobile Subscriber Identity (Identité Internationale d'un abonné, cette identité est inscrite dans la carte SIM (Subscriber Identification Module, c'est à dire module d'identification de l'abonné).). Le serveur de résolution détermine donc à quel numéro de téléphone il doit envoyer un message court, ou SMS pour Short Message Service. Ce message court est envoyé en mode transparent, c'est-à-dire qu'il ne sera pas vu par l'utilisateur et comporte des données indiquant au terminal mobile qu'un poste distant souhaite établir avec lui une communication en mode donnée, par exemple via Internet. Mais il peut aussi être envoyé en mode non-transparent, ce qui permet à l'utilisateur d'être notifié d'une demande d'ouverture de session et de pouvoir la valider explicitement.

L'application SIM Toolkit (STK, SIM aux capacités étendues), déclenchée par l'arrivée du message SMS (et son éventuelle validation par l'utilisateur dans un processus d'interactivité), initie alors une session TCP vers un port spécifié du serveur de résolution SIP. Pour des raisons de flexibilité et de sécurité, l'information d'adresse IP et de numéro de port du serveur SIP sont envoyées dans le message SMS, dont le contenu global est signé au moyen d'une clé privée par le serveur SIP. Cette session TCP permet alors au terminal d'envoyer un message permettant au serveur de résolution SIP d'associer une adresse Internet publique au terminal.

La création de cette session sortante entraîne, par le biais des mécanismes standard GPRS, l'allocation de contexte PDP et d'une d'adresse IP pour le terminal. Cette adresse est une adresse privée du réseau de données GPRS. La mécanique de transformation d'adresse conforme à la fonction NAT garantit que, lorsque les paquets TCP/IP du terminal parviennent au serveur de résolution SIP, situé du côté de l'Internet public, leur adresse IP a été translatée en une adresse publique qui correspond à l'adresse privée interne au réseau GPRS du terminal. Comme les paquets TCP/IP contiennent l'information de MSISDN/IMSI, le serveur de résolution peut mettre à jour la table d'association entre l'adresse symbolique SIP, MSISDN/IMSI et l'adresse IP publique allouée.

Le serveur de résolution émet alors un message à destination du poste souhaitant établir une communication en mode données avec le terminal distant. Le poste récupère ensuite l'adresse Internet publique et peut s'adresser, selon un protocole Internet par exemple FTP, (File Transfert Protocol, pour Protocole de transfert de fichiers) directement au terminal mobile via une connexion Internet.

L'invention a pour objet un procédé d'adressage d'un terminal mobile identifié par une première adresse symbolique au cours duquel:
- on émet, depuis un poste appelant vers un serveur de résolution de la première adresse via un premier réseau, une demande d'établissement d'une connexion avec le terminal mobile,
- on associe, dans le serveur de résolution de la première adresse symbolique, la première adresse symbolique à une entrée d'une table de résolution, enregistrée dans une mémoire du serveur de résolution de la première adresse,
- on extrait de la table de résolution une deuxième adresse du terminal mobile dans un deuxième réseau,
- on émet un message d'invitation, depuis le serveur de résolution de la première adresse vers le terminal mobile via le deuxième réseau,
- on reçoit, sur une passerelle de communication, une requête d'allocation de moyens de communication pour établir une connexion entre le poste appelant et le terminal mobile via la passerelle de communication,
- on émet, depuis la passerelle de communication vers le serveur de résolution de la première adresse via un troisième réseau, une trame d'allocation de moyen comportant une description des moyens alloués,
- on émet, depuis le serveur de résolution de la première adresse vers le poste appelant via le premier réseau, une trame de résultat de la demande d'établissement de connexion comportant une description des moyens alloués,
- on établit une communication entre le poste appelant et le terminal mobile via la passerelle de communication en utilisant les moyens alloués.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration de moyens utiles à la mise en oeuvre du procédé selon l'invention.
- Figure 2 : une illustration d'étape du procédé selon l'invention.

On rappelle que lorsque l'on prête, au cours de la description, une action à un microprocesseur ou à un appareil comportant un microprocesseur, cette action est effectuée par le microprocesseur commandé par des codes instruction enregistrés dans une mémoire. On rappelle aussi qu'un bus est un ensemble de pistes ou de fils comportant ces éléments en nombre suffisant pour véhiculer des signaux d'adresses, de données, de commandes, d'interruptions d'horloges et d'alimentations.

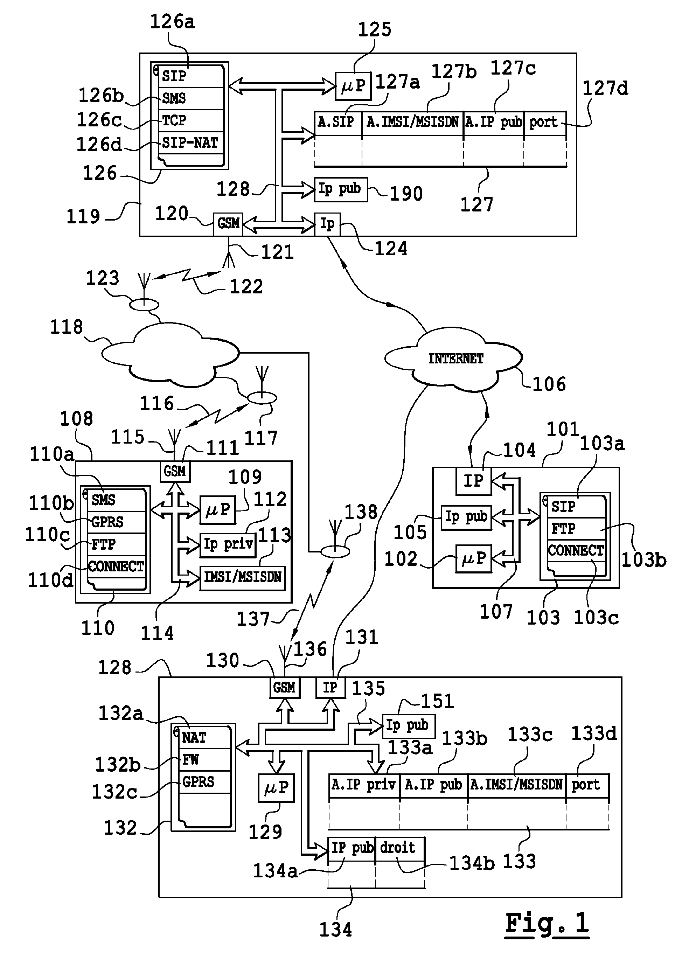

La figure 1 montre un poste 101 appelant. Le poste 101 est par exemple un ordinateur personnel. Le poste 101 comporte un microprocesseur 102, une mémoire 103 de programme, des circuits 104 d'interface avec un réseau 106 Internet, et une mémoire 105 dans laquelle est enregistrée l'adresse Internet publique du poste 101. Les éléments 102 à 105 sont connectés via un bus 107. L'interface 104 permet de connecter le poste 101 au réseau 106 Internet. La mémoire 103 comporte plusieurs zones, notamment une zone 103A comportant des codes instruction correspondant à la mise en oeuvre du protocole SIP, et une zone 103B comportant des codes instruction correspondant à la mise en oeuvre du protocole FTP. Dans notre exemple on considère en effet que le poste 101 souhaite établir une liaison en mode donnée, selon le protocole FTP, avec un terminal 108 mobile.

Pour établir cette connexion, la mémoire 103 comporte une zone 103C comportant les codes instruction correspondant à l'établissement de cette connexion. Les codes instruction de la zone 103C constituent un programme qui fait appel à des primitives, aussi appelées sous-programmes, des zones 103A et 103B. Cela signifie qu'au cours de l'exécution du programme de la zone 103C, celui-ci fait appel à des primitives correspondant à l'émission ou à la réception d'une trame selon les protocoles SIP ou FTP.

L'adresse Internet publique enregistrée dans la mémoire 105 garantit que le poste 101 est visible depuis l'Internet public.

La figure 1 montre que le terminal 108 comporte un microprocesseur 109, une mémoire 110 de programme, des circuits 111 d'interface avec un réseau de téléphonie mobile, une mémoire 112 pour enregistrer une adresse privée, et une mémoire 113 pour enregistrer un numéro IMSI et/ou un numéro de téléphone. Les éléments 109 à 113 sont connectés entre eux par un bus 114. Les circuits 111 sont d'autre part connectés à une antenne 115 ce qui permet d'émettre et de recevoir des signaux radioélectriques 116 à destination, ou venant de, une station 117 de base d'un réseau 118 de téléphonie cellulaire.

La mémoire 110 comporte une zone 110A correspondant à des codes instruction pour la mise en oeuvre du service de messages courts. Une zone 110B comporte des codes instruction correspondant à la mise en oeuvre du mode GPRS. Une zone 110C correspond à des codes instruction pour la mise en oeuvre du protocole FTP. Une zone 110D comporte des codes instruction qui correspondent à la gestion des demandes de connexion selon l'invention. Ces fonctionnalités sont, par exemple, disponibles via une carte SIM Toolkit comportant des primitives de gestion, de réception/envoi de SMS, de connexion GPRS accessibles depuis un programme exécuté par le processeur de la carte SIM. Une telle carte communique avec le terminal 108 par des moyens connus.

Dans notre exemple les circuits 111 correspondent à la norme GSM qui, utilisée en association avec les codes instruction GPRS de la zone 110B, permet d'obtenir un terminal 108 compatible avec la plupart des protocoles utilisés sur l'Internet. Cependant dans une variante de l'invention les circuits 111 peuvent aussi fonctionner selon la norme UMTS par exemple. Dans ce cas il n'est plus nécessaire de mettre en oeuvre le mode GPRS, car la norme UMTS prévoit ce type de fonctionnement.

La mémoire 112 permet d'enregistrer l'adresse qui est allouée au terminal 108 lorsque celui-ci effectue une demande d'allocation d'un contexte dit PDP. Il s'agit en fait, pour le terminal 108, d'une activation du fonctionnement en mode GPRS. Le terminal 108 se voit alors attribué une adresse enregistrée dans la mémoire 112. Cette adresse est, par exemple, une adresse IPV4 privée. Elle permet d'identifier le terminal 108 dans le réseau GPRS considéré comme un réseau privé par opposition au réseau Internet qui est lui considéré comme un réseau public.

La figure 1 montre aussi un serveur 119 de résolution d'adresses. La connexion du serveur de résolution SIP au réseau se fait, par exemple, via une connexion TCP/IP ou X.25 au serveur SMSC (Short Message Service Center, pour Centre du Service de Message Court), et éventuellement via SS7/TCAP/MAP pour une connexion, vers le HLR du réseau GSM, permettant d'avoir accès à l'information de présence. En effet, il faut noter qu'il peut y avoir une interface entre le serveur SIP-NAT et le HLR, qui permet de vérifier l'état du terminal et, dans le cas où il n'est pas attaché au réseau GPRS, de renvoyer un message d'erreur «non joignable». La figure 1 montre aussi des moyens 120 à 123 GSM permettant de connecter, dans une variante, le serveur 119 au réseau 118 cellulaire. Dans la pratique les moyens de connexion du serveur 119 au réseau 118 permettent l'échange de messages SMS entre le serveur 119 et le terminal 108.

Le serveur 119 comporte aussi des circuits 124 interface avec le réseau Internet 106. Le serveur 119 comporte aussi un microprocesseur 125, une mémoire 126 de programme, et une mémoire 127 d'association. Les éléments 120 et 124 à 127 sont connectés entre eux par un bus 128.

La mémoire 126 comporte une zone 126A correspondant à des codes instruction pour la mise en oeuvre du protocole SIP. Une zone 126B comporte des codes instruction correspondant à la mise en oeuvre d'un service de messages courts, une zone 126C correspond à des codes instruction pour la mise en oeuvre du protocole TCP (Transport Control Protocol, pour protocole de transport contrôlé), et une zone 126D correspondant à la mise en oeuvre d'une partie du procédé selon l'invention. Les codes instruction de la zone 126D font appel aux codes instruction des zones 126A, 126B et 126C.

La mémoire 127 de résolution est aussi appelée une table de résolution. En effet la mémoire 127 est structurée en lignes et en colonnes. Une colonne 127A correspond à une adresse symbolique selon le protocole SIP. Une colonne 127B correspond à un numéro IMSI et/ou un numéro de téléphone. Une colonne 127C correspond à une adresse Internet publique. Une colonne 127D complète la colonne 127C en spécifiant un nombre de numéros de ports tels que définis par le protocole IP. Chaque ligne de la mémoire 127 d'association correspond à l'allocation de moyens de communication via le réseau Internet à un terminal mobile identifié par la valeur de la colonne 127B. La table 127 permet aussi d'effectuer une association entre une adresse symbolique et un numéro de téléphone et un numéro IMSI.

Le serveur 119 comporte aussi une mémoire 150 d'adresse pour enregistrer une adresse Internet publique via laquelle le serveur 119 est visible sur le réseau Internet.

La figure 1 montre aussi une passerelle 128 de communication. La passerelle 128 correspond à un GGSN tel que défini dans l'ouvrage ayant pour titre *Réseau GSM 5*^{*ème*} *édition revue et augmentée,* aux éditions Hermès et écrit par Xavier LAGRANGE, Philippe GODLEWSKI, et Sami TABANNE. La description du GGSN se trouve en particulier au chapitre 14.3 de cet ouvrage.

La passerelle 128 comporte un microprocesseur 129, des circuits 130 d'interface avec le réseau 118 GSM, des circuits 131 d'interface avec le réseau 106 Internet, une mémoire 132 de programme, une mémoire 151 pour enregistrer une adresse Internet publique de la passerelle 128, une mémoire 133 d'allocation de moyens de communication, et une mémoire 134 de contrôle d'accès. Les éléments 129 à 134 sont connectés via un bus 135.

La mémoire 132 comporte une zone 132A correspondant à des codes instruction pour la mise en oeuvre d'un programme de translation d'adresse (NAT), la zone 132B comporte des codes instruction correspondant à la mise en oeuvre d'un programme pare-feu, aussi connu sous le nom de firewall, une zone 132C comporte des codes instruction correspondant à la gestion du mode GPRS. La passerelle 128 comporte aussi des moyens pour se connecter et communiquer avec le réseau 118 cellulaire. Ces moyens sont, par exemple des moyens purement GSM.

La mémoire 133 est structurée en table. La mémoire 133 comporte une colonne 133A correspondant à une adresse Internet privée, une colonne 133B correspondant à une adresse Internet publique, une colonne 133C correspondant à l'identifiant de type numéro IMSI ou numéro de téléphone, et une colonne 133D correspondant à des numéros de ports. La table 133 permet d'associer à un terminal mobile identifié par son numéro IMSI ou son numéro de téléphone, des moyens de communication. Ces moyens sont d'une part une adresse Internet publique visible depuis le réseau Internet public, d'autre part une adresse Internet privée qui permet d'identifier le terminal mobile fonctionnant en mode GPRS sur le réseau de téléphonie cellulaire. Ces moyens sont éventuellement complétés par une liste de ports sur lesquels le terminal mobile peut émettre et/ou recevoir via la passerelle 128 de communication. Ces moyens sont comportés dans un contexte PDP.

La table 134 permet à la fonction firewall de la passerelle 128 de savoir quelles sont les titulaires d'adresses publiques qui ont le droit d'émettre des messages via la passerelle 128. Par exemple, la mémoire 128 comporte une colonne 134A correspondant à une adresse Internet publique et une colonne 134B décrivant les droits associés à cette adresse. Les droits sont par exemple une liste de ports sur lesquels le titulaire de l'adresse Internet publique a le droit d'envoyer des messages.

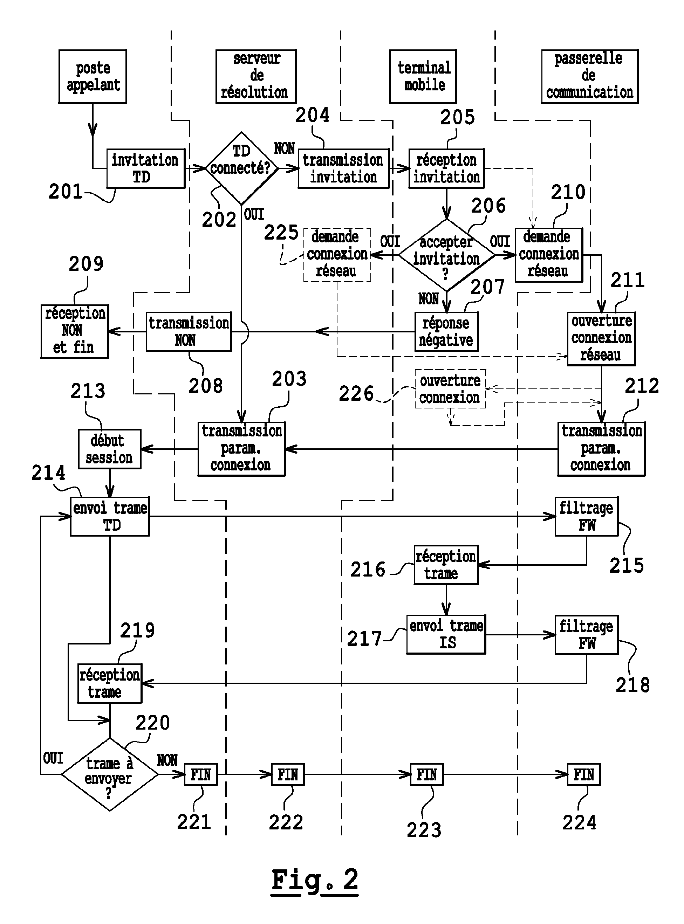

La figure 2 décrit une mise en oeuvre des moyens qui viennent d'être décrits avec la figure 1.

La figure 2 montre une étape 201 préliminaire exécutée par le poste appelant. L'étape 201 est une étape d'initiation de la communication. Au cours de l'étape 201 le poste 101 utilise le protocole SIP pour émettre une trame dite d'invitation dans ce protocole. Une telle trame comporte un en-tête et un corps de message. Cet en-tête et ce corps de messages sont définis dans la RFC 2543. Cette trame d'invitation correspond à une demande d'établissement de connexion. L'en-tête de cette trame comporte donc un code l'identifiant comme une trame d'invitation, et une adresse symbolique du terminal mobile avec lequel l'utilisateur du poste 101 souhaite établir la connexion. L'adresse symbolique est par exemple sip:terminal108@domaine.fr. La trame d'invitation comporte aussi les paramètres selon lesquels l'utilisateur du poste 101 souhaite établir la connexion, dans notre exemple ces paramètres ont pour objet d'établir une connexion selon le protocole FTP. Ces paramètres pourraient très bien avoir pour objet d'utiliser un autre protocole, par exemple le HTTP, ou d'établir une communication vocale ou une visioconférence.

La trame d'invitation est envoyée au serveur 119 de résolution via le réseau 106 Internet. Le poste 101 a donc connaissance d'une adresse Internet publique du serveur 119, ou d'une adresse symbolique de ce serveur, par exemple www.serveur119.fr.

On passe à une étape 202 de réception de la demande d'établissement de connexion par le serveur 119 de résolution. Dans l'étape 202 le serveur 119 extrait de la demande d'établissement de connexion l'identifiant symbolique du terminal mobile avec lequel le poste appelant souhaite établir une connexion. Le serveur 119 parcourt alors la table 127 à la recherche de cet identifiant symbolique, celui-ci étant enregistré dans la colonne 127A. Une fois l'identifiant symbolique trouvé, le serveur 119 est en mesure de déterminer si le terminal est, ou n'est pas, accessible via le réseau 106 Internet. Cette détermination se fait par la consultation du champ 127C correspondant à l'adresse symbolique. Si ce champ est renseigné cela signifie que le terminal mobile est déjà accessible via une adresse Internet publique et le réseau 106 Internet, on passe alors de l'étape 202 à une étape 203 de transmission des paramètres de connexion. Dans le cas contraire, si le terminal mobile ne possède pas d'adresse Internet publique, on passe à une étape 204 de transmission de l'invitation au terminal mobile.

Dans l'étape 204 le serveur 219 constitue un message court, ou SMS. Ce message court est envoyé au terminal 108 mobile dont le numéro de téléphone est obtenu grâce à la valeur du champ 127B correspondant à l'adresse symbolique contenue dans la demande d'établissement de connexion. Ce message court comporte les paramètres de la connexion que souhaite établir le poste 101, ainsi qu'un identifiant de l'utilisateur du poste 101. On passe à une étape 205 de réception de l'invitation par le terminal 108 mobile.

Dans l'étape 205 le message court d'invitation est lu par le terminal 108. On passe à une étape 206 d'acceptation ou non de l'invitation.

Dans l'étape 206 le terminal 108 présente à son utilisateur une invitation pour l'établissement d'une connexion. L'utilisateur peut alors utiliser un clavier du terminal 108 pour décider s'il souhaite ou non accepter l'invitation. La présentation du message d'invitation se fait sur un écran du terminal 108 et comporte un identifiant de la personne souhaitant établir la connexion, et les paramètres de la connexion que cette personne souhaite établir. Si l'utilisateur refuse la connexion, on passe à une étape 207 où le terminal 108 compose un message court comportant un code instruction spécifiant que le terminal 108 ne souhaite pas accepter la connexion. Le message court est alors envoyé au serveur 119 de résolution. On passe à l'étape 208 de transmission du refus d'établissement de la communication.

Dans l'étape 208 le serveur 119 transforme le message court de refus en une trame SIP d'acquittement. Cette trame comporte donc un code instruction qui indique que le terminal 108 ne souhaite pas établir la connexion, cette trame est transmise au poste 101 appelant. On passe à l'étape 209 de réception d'une trame de non-acquittement par le poste appelant.

Dans l'étape 209 le poste appelant reçoit la trame selon le protocole SIP lui spécifiant que le terminal mobile ne souhaite pas établir la connexion. Cela met fin à la procédure d'établissement de la connexion.

Si dans l'étape 206 l'utilisateur choisit d'accepter l'invitation on passe à une étape 210 de demande de connexion réseau.

Dans l'étape 210 le terminal 108 émet à destination de la passerelle 128 de communication une demande d'allocation de moyens pour établir une connexion vers le secteur de résolution 119 via le réseau 106 Internet. Cette demande est effectuée telle que défini, par exemple, dans la norme GPRS. Cette demande comporte des informations sur l'identité du poste 101, ainsi que sur les paramètres de la connexion qui doit être établie. L'information d'identité est, par exemple, le numéro MSISDN du poste 101, l'information sur les paramètres de la connexion et, par exemple, le protocole qui sera utilisé à savoir le protocole FTP.

Dans une variante de l'invention on considère que les demandes de connexion sont systématiquement acceptées par le terminal 108. On passe donc directement de l'étape 205 à l'étape 210.

De l'étape 210 on passe à une étape 211 d'allocation de moyens de communication par la passerelle 128 de communication. Dans l'étape 211 la passerelle 128 reçoit la demande d'allocation de moyens émise par le terminal 108. Suite à cette demande la passerelle 128 met à jour la table 133. C'est-à-dire qu'elle affecte à un identifiant public du terminal 108, par exemple son numéro IMSI ou son numéro de téléphone (MSISDN), un couple adresse Internet privée / adresse Internet publique. L'adresse Internet privée permet d'identifier le terminal 108 sur le réseau GPRS, l'adresse Internet publique permet d'identifier le terminal 108 sur le réseau Internet public. La passerelle 128 peut aussi affecter un numéro de port pour la connexion que va établir le terminal 108. Ainsi lorsque la passerelle 128 recevra un message dont le destinataire est identifié par une adresse IP et un numéro de port, et que cette adresse IP et ce numéro de port correspondent à une adresse Internet publique de la table 133 alors la passerelle 128 redirigera ce message vers le terminal dont l'identifiant est présent dans la ligne comportant l'adresse Internet publique.

Dans l'étape 211 la passerelle 128 met aussi à jour la table 134. En effet le message de demande d'allocation de moyens comporte un identifiant du poste 101. La passerelle 128 insère donc une ligne dans la table 134, le champ adresse Internet publique de la table 134 correspondra alors à l'adresse Internet publique du poste 101, et le champ 134b correspondra au port qui a été alloué pour l'établissement d'une connexion avec le terminal 108. La passerelle 128 est ainsi en mesure de filtrer les messages adressés au terminal 108 et d'éviter ainsi les messages indésirables. On considère ici que tous les messages adressés à la passerelle 128 dont les expéditeurs ne sont pas inscrits dans la table 134 sont indésirables. Il s'agit d'une technique classique de filtrage par un pare-feu, il en existe d'autres qui ne sont pas décrites ici.

Ces moyens de communication étant alloués, lorsque le terminal 108 émet un message vers la passerelle de communication, celui-ci est envoyé avec l'adresse Internet privée allouée. La passerelle 128 retransmet alors ce message vers l'Internet public, sur ce réseau Internet public ce message sera vu comme ayant été envoyé à partir de l'adresse Internet publique allouée par la passerelle 128. Il s'agit d'un mécanisme de translation d'adresses.

De l'étape 211 on passe à une étape 212 de transmission des paramètres de connexion alloués au serveur 119. Dans cette étape 212 la passerelle 128 constitue un message, par exemple en utilisant le protocole TCP, dont le corps comporte l'adresse Internet publique allouée, éventuellement le ou les ports alloués et un identifiant public du terminal 108 (soit son numéro IMSI soit son numéro de téléphone). Le champ identifiant l'émetteur de ce message a comme valeur l'adresse Internet publique qui a été allouée. Ce message est donc en fait envoyé par le terminal 108, au serveur 119 via le réseau Internet.

Dans une variante de l'invention, dans l'étape 206 lorsque l'utilisateur du terminal 108 accepte la demande de connexion, on passe à une étape 225 de demande de connexion mais, cette demande est effectuée par le serveur 119. Lors de l'acceptation de l'invitation le terminal 108 émet donc un message court d'acceptation à destination du serveur 119. Ce message court d'acceptation est reçu dans l'étape 225.

Dans l'étape 225 le serveur 119 émet alors une requête, par exemple en utilisant le protocole FCP (Firewall Control Protocol, pour protocole de contrôle d'un programme pare-feu défini par l'IETF dans une publication de Jiri Kuthan et Jonathan Rosenberg), à destination de la passerelle 128. Cette requête comporte un champ identifiant la requête comme étant une demande d'allocation de moyens de communication, et un champ identifiant le terminal 108. Cette requête est transmise via le réseau 106 Internet. La requête est reçue par la passerelle 128 et traitée comme pour l'étape 211.

Dans cette variante l'étape 211 est suivie d'une étape 226 d'ouverture de connexion dans laquelle le terminal 108 reçoit des messages émis par la passerelle 128 pour l'avertir de l'allocation des moyens de communication. Dans cette variante c'est donc la passerelle 128 qui prend l'initiative et non plus le terminal 108. De l'étape 226 on passe à l'étape 212.

De l'étape 212 on passe à l'étape 203. Dans l'étape 203 le serveur 119 constitue un message d'acquittement selon le protocole SIP. Le corps de ce message comporte l'adresse Internet publique qui a été allouée. Le message est envoyé au poste 101 via le réseau 106 Internet.

De l'étape 203 on passe à l'étape 213 de début de session.

Dans l'étape 213 le poste 101 vient de recevoir les paramètres alloués par la passerelle 128 pour l'établissement d'une connexion avec le terminal 108. Le poste 101 est donc en possession de l'adresse Internet publique grâce à laquelle il peut joindre le poste 108. On passe alors à une étape 214 d'envoi d'une trame par le poste 101. Dans l'étape 214 le poste 101 constitue une trame selon le protocole FTP dont l'adresse de destination est l'adresse Internet publique qui a été allouée par la passerelle 128. Le réseau Internet va router cette trame jusqu'à la passerelle 128. Dans l'étape 215 la passerelle 128 reçoit la trame au format FTP émise par le poste 101.

Dans l'étape 215 la passerelle 128 extrait de la trame qu'elle vient de recevoir l'identifiant de l'émetteur de cette trame. Si cet identifiant est présent dans la table 134 alors cette trame sera transmise plus avant, sinon elle est rejetée. Dans le cas présent cet identifiant est présent puisque la table 134 a été mise à jour lors de l'étape 211. On passe à une étape 216 de réception de la trame par le terminal 108 mobile. Dans l'étape 216 le terminal 108 reçoit la trame qui a été émise par le poste 101. Cette trame a alors d'abord été reçue par la passerelle 128 puis réémise par cette même passerelle en utilisant l'adresse IPV4 privée allouée lors de l'étape 211. Cette adresse privée correspond, via la table 133, à l'adresse publique utilisée par le poste 101 pour communiquer avec le terminal 108.

On passe à une étape 217 dans laquelle le terminal 108 émet à son tour une trame selon le protocole FTP. Le destinataire de cette trame est alors le poste 101 via son adresse Internet publique. Cette trame est émise vers la passerelle 128 qui la reçoit dans l'étape 218. La passerelle 218 vérifie alors que le protocole utilisé a bien été autorisé grâce à la table 133 et à l'identifiant de l'émetteur de cette trame, à savoir l'adresse Internet privée du terminal 108, cet identifiant permettant de retrouver les droits alloués au terminal 108 dans la table 133.

A la fin de l'étape 218 la passerelle 128 émet la trame, ayant été à l'origine émise par le terminal 108, à destination du poste 101. Dans cette trame le champ identifiant l'émetteur a pour valeur l'adresse Internet privée ayant été allouée lors de l'étape 211 au terminal 108. Dans l'étape 219 suivant l'étape 218, le terminal 108 reçoit la trame à l'origine émise par le terminal 108. On passe à une étape 220 dans laquelle le poste 101 détermine s'il a reçu toutes les trames qu'il devait recevoir, ou s'il a émis toutes les trames qu'il devait émettre. S'il n'a pas encore reçu ou émis toutes les trames on repasse à l'étape 214. Sinon on passe à une étape 221 d'interruption de la connexion. Dans l'étape 221 le poste 101 émet, à destination du serveur 119, une trame SIP dite BYE (au revoir). Cette trame comporte un identifiant du terminal 108. On passe à l'étape 222 de réception de la trame SIP BYE par le serveur 119.

Dans l'étape 222 le serveur 119 émet un message court à destination du terminal mobile l'informant que le poste 101 souhaite interrompre la communication. Ce message court d'interruption est reçu par le terminal 108 mobile dans l'étape 223. Le serveur 119 met aussi à jour la table 127, c'est-à-dire qu'il efface le contenu du champ des colonnes 127c et 127d correspondant au terminal 108.

Au cours de l'étape 223 le terminal 108 mobile envoie un ou des messages, selon le protocole GPRS, à la passerelle 128 de communication. Dans l'étape 224 la passerelle 128 reçoit ces messages. Dans l'étape 224 la passerelle 128 est donc informée de l'interruption de la communication. La passerelle 128 met donc à jour les tables 133 et 134. Cela revient à effacer, dans la table 133 la ligne correspondant au terminal 108, et dans la table 134 la ligne correspondant au poste 101.

Dans l'invention les communications entre le poste 101 et le serveur 119 sont effectuées via le réseau 106 Internet en utilisant le protocole SIP (c'est le premier réseau) défini dans la RFC 2543. Les communications entre le serveur 119 et le terminal 108 sont effectuées en utilisant des messages courts tels que définis, par exemple, dans la norme GSM (c'est le deuxième réseau). Les communications entre le terminal 108 et la passerelle 128 de communication sont effectuées selon le protocole GPRS (c'est le troisième réseau). Les communications entre la passerelle 128 et le terminal 101 sont effectuées via le réseau Internet 106 selon un protocole spécifié lors de l'allocation des moyens de communication. Les protocoles possibles sont a priori tous les protocoles utilisables sur le réseau 106 Internet. Parmi ces protocoles on peut citer TCP, UDP, FTP, HTTP et il en existe bien d'autres.

Les communications entre la passerelle 128 et le serveur 119 sont effectuées via le réseau 106 Internet en utilisant le protocole TCP ou le protocole FCP (c'est le troisième réseau).

Dans la mesure où on utilise le réseau Internet pour un certain nombre de communications il est possible de mettre en oeuvre des solutions de cryptage déjà existantes. On peut par exemple utiliser IP Secure, pour Internet Sécurisé, dans lequel le corps des trames Internet est crypté de manière à ce que leur contenu ne soit accessible que par le destinataire de la trame.

Les avantages de l'infrastructure selon l'invention sont donc les suivants. Cette infrastructure permet de résoudre le problème d'adressage entrant des terminaux mobiles immédiatement, et avec les équipements existants. Cette solution permet de déployer rapidement des services à valeur ajoutée comme la messagerie instantanée dans toutes ses versions multimédia, les services de notification de bureau mobile etc. De plus les protocoles standards sont utilisés.

Dans la mesure où un terminal mobile n'est pas visible en permanence depuis le réseau Internet public, et dans la mesure où son adresse Internet publique lorsqu'elle existe n'est pas publiée, cela limite les possibilités d'attaque de type destructrices. Un autre avantage est que ce mode de réalisation permet à l'utilisateur du terminal 108 de décider quelle demande de connexion il accepte et quelle demande de connexion il refuse.

On note aussi que, dans la variante où c'est le terminal 108 qui prend l'initiative d'établir la liaison avec la passerelle 128, il n'y a pas de modification à apporter à ladite passerelle. En effet c'est le terminal 108 qui prend l'initiative d'envoyer un message, via Internet, au serveur 119. Ce message est transmis de manière standard à l'adresse IP (celle du serveur 119) spécifiée par le terminal. Ce message comporte les éléments permettant au serveur 119 d'interpréter ce message comme une réponse du terminal à la demande d'établissement de connexion émise par le poste 101. Dans ce cas la passerelle 128 n'est qu'un intermédiaire connu.

Dans la variante où la connexion entre le terminal 108 et la passerelle 128 est ouverte sur l'initiative de la passerelle 128, suite à la réception d'un message du serveur 119, cette connexion est établie à partir d'un identifiant du terminal 108, de préférence un numéro IMSI ou un numéro MSISDN. Le résultat de l'ouverture de la connexion, en particulier l'adresse IP publique allouée au terminal 108, est transmis au serveur 119. Cette transmission est faite soit par le terminal 109 soit par la passerelle 128. Dans cette variante les modifications à apporter à la passerelle ne sont pas importantes.

Dans une variante de l'invention il est aussi possible d'utiliser des trames SIP dites trames option pour spécifier la qualité des services et des moyens qui sont alloués par la passerelle 128. Parmi les facteurs de qualité on peut citer la bande passante, c'est-à-dire le débit, et les protocoles utilisables. Ces options sont alors demandées par le poste 101 et acceptées ou dégradées par la passerelle 128 sous le contrôle éventuel du terminal 108.

Dans l'invention c'est l'utilisateur du terminal qui est joint, et non pas seulement un terminal donné, au travers de son adresse symbolique SIP (par exemple, SIP:pierre.dupont@cegetel.fr). Ainsi, il est possible d'associer plusieurs terminaux mobiles à l'utilisateur et de faire en sorte que le serveur 119 SIP notifie successivement tous les terminaux associés jusqu'à trouver avec succès celui «actif» (ou désiré actif). L'utilisateur peut ainsi configurer des filtres d'accès permettant de contrôler totalement les applications, les sites ou terminaux extérieurs au réseau qui pourront contacter son terminal.

Dans l'invention, les adresses SIP peuvent correspondre à des personnes physiques, aussi bien qu'à un service, par exemple support technique, d'une société.

Grâce à l'invention, il est aisé d'établir, et ce à un coût minimal, des sessions depuis l'Internet publique vers des terminaux mobiles en déployant des services à forte valeur ajoutée comme la messagerie instantanée, des services multimédia, la notification de bureau mobile.

La mise en oeuvre de l'invention n'implique pas une mise à niveau complète de l'infrastructure, comme se serait la ces pour IPV6. Cette mise en oeuvre est de plus compatible avec le futur déploiement d'IPV6, elle n'utilise que des protocoles standards et existants. Le déploiement de la solution selon l'invention peut donc être immédiat tant au niveau de l'infrastructure, qu'au niveau des terminaux. Il n'est de plus pas nécessaire de modifier les terminaux car la solution peut être rajouter au terminaux via une carte SIM toolkit par exemple.

L'invention permet de gérer l'allocation et la «dé-allocation» dynamique d'adresse par l'emploi de politiques locales de gestion du l'ensemble d'adresses au niveau de la fonction NAT de la passerelle 128, en permettant aux applications de contrôler cette politique en cas de trafic très intermittent, etc.

L'invention est également compatible avec le «roaming» (itinérance géographique avec éventuellement changement d'opérateur) GPRS, c'est-à-dire permet d'adresser des terminaux actifs dans un réseau mobile visité partenaire du réseau natif (celui auquel est abonné l'utilisateur du terminal 108).

De même, l'invention peut être exploitée combinée avec une politique de surveillance locale de trafic. Par exemple, dans le cas de protocoles «connectionless» comme UDP, il n'y a pas d'établissement de session au niveau transport, et un moyen de savoir si une connexion doit être laissée ouverte ou peut être, au niveau de la passerelle 128, de surveiller le trafic et de lancer une procédure de «dé-activation» après un temps configurable d'inactivité. Dans ce cas, la passerelle 128 comporte des moyens pour émettre une requête de «dé-allocation» au serveur 119, qui peut alors signaler au poste 101 qu'une fermeture de connexion est en cours. Le serveur 119 envoie alors un message SIP BYE au poste 101. Si le poste 101 répond par un message SIP ACK, le serveur 119 autorise la passerelle 128 à «dé-allouer» les adresses comme prévu à l'étape 224. Si le poste 101 répond par un nouveau message SIP «Invite», le serveur 119 ne l'autorise pas.

Un terminal mobile est, par exemple, un téléphone mobile, un assistant électronique personnel (PDA), ou plus généralement tout dispositif doté de moyens de communication via un réseau de données.

## Revendications

1. Procédé d'adressage d'un terminal mobile identifié par une première adresse (127a) symbolique au cours duquel:
- on émet (201), depuis un poste appelant vers un serveur de résolution de la première adresse via un premier réseau, une demande d'établissement d'une connexion avec le terminal mobile,
- on associe, dans le serveur de résolution de la première adresse symbolique, la première adresse symbolique à une entrée d'une table (127) de résolution, enregistrée dans une mémoire du serveur de résolution de la première adresse,
- on extrait de la table de résolution une deuxième adresse (127b) du terminal mobile dans un deuxième réseau,
- on émet (204) un message d'invitation, depuis le serveur de résolution de la première adresse vers le terminal mobile via le deuxième réseau,
- on reçoit (210-211), sur une passerelle de communication, une requête d'allocation de moyens de communication pour établir une connexion entre le poste appelant et le terminal mobile via la passerelle de communication,
- on émet (212), depuis la passerelle de communication vers le serveur de résolution de la première adresse via un troisième réseau, une trame d'allocation de moyens comportant une description des moyens alloués,
- on émet (203), depuis le serveur de résolution de la première adresse vers le poste appelant via le premier réseau, une trame de résultat de la demande d'établissement de connexion comportant une description des moyens alloués,
- on établit (213-219) une communication entre le poste appelant et le terminal mobile via la passerelle de communication en utilisant les moyens alloués.

2. Procédé selon la revendication 1, **caractérisé en ce que** la requête d'allocation est émise par le terminal distant via un quatrième réseau.

3. Procédé selon la revendication 2, **caractérisé en ce que** le quatrième réseau est un réseau de téléphonie mobile supportant le GPRS.

4. Procédé selon la revendication 1, **caractérisé en ce que** la requête d'allocation est émise par le serveur de résolution de la première adresse symbolique via le troisième réseau.

5. Procédé selon la revendication 4, **caractérisé en ce que** la requête d'allocation est émise (213) suite à la réception, par le serveur de résolution de la première adresse, d'un message d'acceptation de l'invitation, le message d'acceptation étant émis par le terminal mobile.

6. Procédé selon l'une des revendications 1 à 5 **caractérisé en ce que** le premier réseau est Internet utilisé en combinaison avec le protocole SIP.

7. Procédé selon l'une des revendications 1 à 6, **caractérisé en ce que** le deuxième réseau est un réseau de téléphonie mobile supportant les messages courts.

8. Procédé selon l'une des revendications 1 à 7, **caractérisé en ce que** le troisième réseau est Internet utilisé en combinaison avec l'un des protocole du groupe formé par TCP et UDP et un protocole applicatif de type FCP (Firewall Control Protocol).

9. Procédé selon l'une des revendications 1 à 8, **caractérisé en ce que** la demande d'établissement de connexion comporte des coordonnées du poste appelant.

10. Procédé selon l'une des revendications 1 à 9, **caractérisé en ce que** les moyens alloués comporte une adresse (133b) Internet publique.

11. Procédé selon l'une des revendications 1 à 10, **caractérisé en ce qu'**à la fin de la communication entre le poste appelant et le terminal mobile, on libère les moyens alloués.

12. Procédé selon l'une des revendications 1 à 11, **caractérisé en ce que** le serveur de résolution de la première adresse est identifié par une adresse (150) Internet publique.

13. Procédé selon 'lune des revendications 1 à 12, **caractérisé en ce que** la passerelle (151) de communication est identifiée par une adresse Internet publique.

14. Procédé selon l'une des revendications 1 à 13, **caractérisé en ce que** la trame d'allocation comporte un identifiant d'émetteur, la valeur de cet identifiant est une adresse Internet publique comportée par les moyens alloués.

15. Procédé selon l'une des revendications 1 à 14, **caractérisé en ce que** à la réception d'une trame d'allocation, le serveur de résolution de la première adresse met à jour la table de résolution en fonction des moyens alloués.
